# EUROPEAN PATENT SPECIFICATION

(11) **EP 3 208 574 B1**
(45) Date of publication and mention of the grant of the patent: **12.09.2018**
(21) Application number: 16206165.9
(22) Date of filing: 22.12.2016
(51) Int. Cl.: G01D 5/20, H02K 3/52

(54) **RESOLVER STATOR**
DREHMELDERSTATOR
STATOR DE RÉSOLVEUR

(30) Priority: 18.02.2016 JP 2016028845
(43) Date of publication of application: 23.08.2017
(73) Proprietor: Japan Aviation Electronics Industry, Shibuya-ku Tokyo (JP)
(72) Inventor: OZAKI, Yoshiaki, TOKYO (JP)
(74) Representative: GIE Innovation Competence Group

(56) References cited:
- EP-A2- 1 276 208
- US-A1- 2006 186 753
- US-A1- 2007 040 467
- US-B1- 7 739 788

## Description

### BACKGROUND OF THE INVENTION

### 1. Field of the Invention

The present invention relates to a resolver stator.

### 2. Description of Related Art

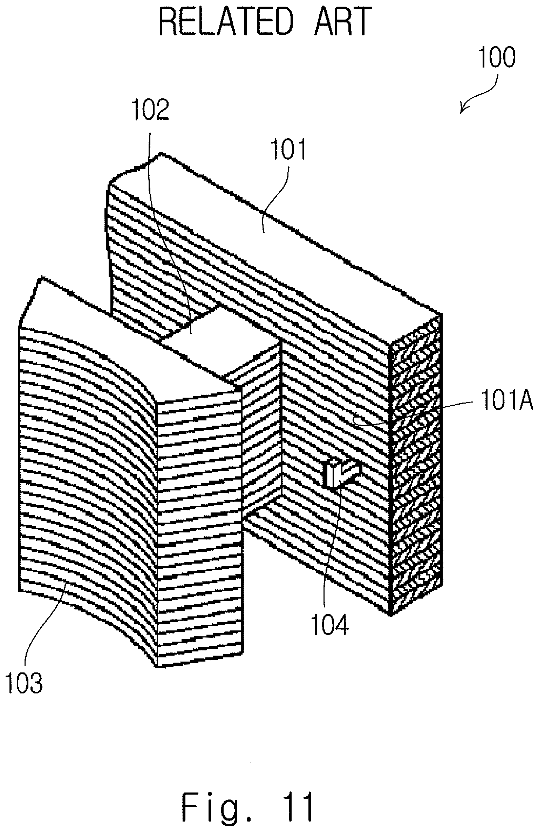

An example of a technique for winding a connecting wire around an inner peripheral surface of a stator core is disclosed in Japanese Unexamined Patent Application Publication No. 2012-50194, although its technical field is different from the technical field to which the present invention belongs. Japanese Unexamined Patent Application Publication No. 2012-50194 does not relate to a resolver, but instead relates to a motor. Specifically, Japanese Unexamined Patent Application Publication No. 2012-50194 discloses a technique for a stator 100 of an inner rotor type motor as shown in Fig. 11 of this application. More specifically, the stator 100 includes a yoke portion 101 that is provided along the circumferential direction of a rotor (not shown), a plurality of teeth portions 102 that project from the yoke portion 101 toward the rotor, and a magnetic pole portion 103 that is provided at a distal end of each of the teeth portions 102. Coils (not shown) are wound around the teeth portions 102. An inside surface 101A, which is a side surface of the yoke portion 101 that faces the coils, is provided with a rib 104 for guiding the connecting wire.

The stator 100 disclosed in Japanese Unexamined Patent Application Publication No. 2012-50194 has an inner rotor type structure. Accordingly, if a connecting wire is hooked to the rib 104 while applying a tension to the connecting wire, the connecting wire floats inward in the radial direction from the inside surface 101A in the vicinity of the rib 104, so that it is impossible to start winding the coil from the root of the teeth portions 102. Further, since the connecting wire floats inward in the radial direction from the inside surface 101A in the vicinity of the rib 104, there is a possibility that a winding nozzle may be hooked to the connecting wire and break the connecting wire during winding.

The patent publication EP1276208A2 discloses a stator according to the preamble of claim 1. US7739788 discloses a further known resolver stator. It is an object of the present invention to provide a technique to start winding a coil from the root of teeth.

### SUMMARY OF THE INVENTION

A first exemplary aspect of the present invention is a resolver stator including: a stator core including a yoke having an annular shape, and a plurality of teeth projecting inward in a radial direction from the yoke; an insulator that covers an inner peripheral surface of the yoke; a plurality of coils to be wound around the plurality of teeth, respectively; a connecting wire that electrically connects the plurality of coils to each other; and a guide hook that guides the connecting wire. The plurality of coils include a first coil and a second coil, the first coil and the second coil being adjacent to each other in a circumferential direction. At least a part of the connecting wire extends from the tooth corresponding to the first coil toward the tooth corresponding to the second coil and is hooked to the guide hook so as to be curved in a convex shape projecting outward in the radial direction. The insulator includes: a first inner surface that is located outside of the first coil in the radial direction and faces the first coil in the radial direction; a second inner surface that is located outside of the second coil in the radial direction and faces the second coil in the radial direction; and a recess that is recessed outward in the radial direction relative to a first virtual plane and a second virtual plane, the first virtual plane and the second virtual plane being defined by virtually extending the first inner surface and the second inner surface until the first inner surface and the second inner surface intersect with each other. The first virtual plane virtually extends from the first inner surface. The second virtual plane virtually extends from the second inner surface. The guide hook is disposed at the recess.

According to the present invention, unlike in the case where no recess is formed, when disposing the connecting wire from the tooth corresponding to the first coil toward the tooth corresponding to the second coil, the connecting wire which has passed through the guide hook can be brought closer to the second inner surface. This structure makes it possible to start winding the second coil from the root of the teeth.

The above and other objects, features and advantages of the present invention will become more fully understood from the detailed description given hereinbelow and the accompanying drawings which are given by way of illustration only, and thus are not to be considered as limiting the present invention.

### BRIEF DESCRIPTION OF THE DRAWINGS

Fig. 1 is a perspective view of a resolver stator, in which the illustration of coils and connecting wires is omitted (first exemplary embodiment);
Fig. 2 is a plan view of the resolver stator, in which the illustration of coils and connecting wires is omitted (first exemplary embodiment);
Fig. 3 is an enlarged view showing a portion "A" shown in Fig. 1, in which coils and connecting wires are illustrated (first exemplary embodiment);
Fig. 4 is a sectional view taken along a line IV-IV of Fig. 2, in which the illustration of coils is omitted and connecting wires are illustrated (first exemplary embodiment);
Fig. 5 is an enlarged view of a portion "C" shown in Fig. 2, in which coils are illustrated and the illustration of connecting wires is omitted (first exemplary embodiment);
Fig. 6 is an enlarged view of the portion "C" shown in Fig. 2, in which coils and connecting wires are illustrated (first exemplary embodiment);
Fig. 7 is an enlarged view of a portion "B" shown in Fig. 1, in which the illustration of coils, connecting wires, and teeth located on the front side is omitted (first exemplary embodiment);
Fig. 8 is a schematic diagram for explaining wiring of connecting wires (first exemplary embodiment);
Fig. 9 is a sectional enlarged view of a guide hook (first modified example);
Fig. 10 is a perspective view of a resolver stator, in which coils and connecting wires are illustrated (second exemplary embodiment); and
Fig. 11 is a diagram corresponding to Fig. 5 of Japanese Unexamined Patent Application Publication No. 2012-50194.

### DESCRIPTION OF THE EXEMPLARY EMBODIMENTS

### (First Exemplary Embodiment)

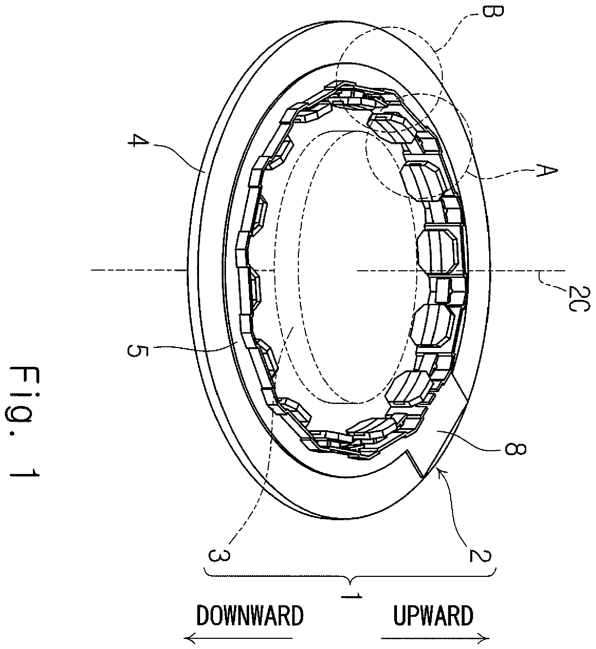

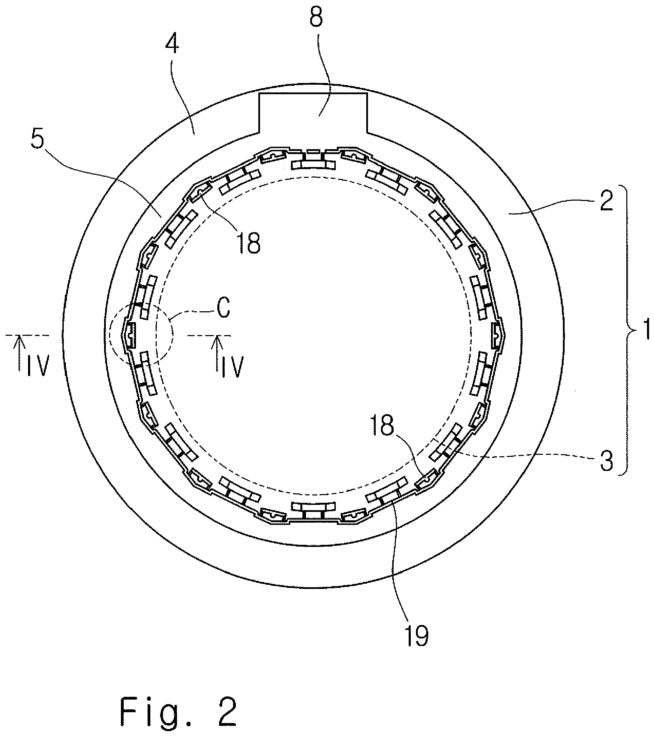

A first exemplary embodiment will be described below with reference to Figs. 1 to 8. As shown in Figs. 1 and 2, a resolver 1 includes a resolver stator 2 and a resolver rotor 3 that is fixed to a shaft of, for example, a motor or an internal combustion (not shown). The resolver 1 is used to measure the angle and rotational speed of the shaft. The resolver 1 is a so-called inner rotor type having a structure in which the resolver rotor 3 is disposed inward in the radial direction of the resolver stator 2. The resolver stator 2 has a rotation axis 2C.

Hereinafter, as a general rule, the term "radial direction" refers to the radial direction of the resolver stator 2 and the term "circumferential direction" refers to the circumferential direction of the resolver stator 2. The resolver stator 2 has an upward direction (first axial direction) parallel to the rotation axis 2C, and a downward direction (second axial direction) opposite to the upward direction.

As shown in Figs. 1 to 3, the resolver stator 2 includes a stator core 4, an insulator 5, a plurality of coils 6, a plurality of connecting wires 7, and an external connecting portion 8.

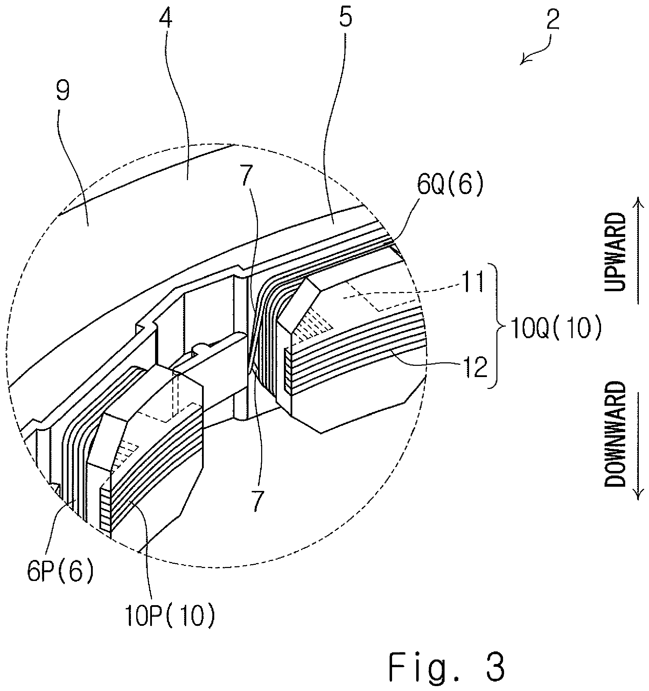

As shown in Fig. 3, in the first exemplary embodiment, the stator core 4 is a laminated body of electromagnetic steel sheets. The stator core 4 includes a yoke 9 having an annular shape, and a plurality of teeth 10 projecting inward in the radial direction from the yoke 9. Each of the teeth 10 includes a tooth winding portion 11 and a teeth distal end 12. The tooth winding portion 11 extends from the yoke 9 toward the rotation axis 2C. The tooth winding portion 11 is elongated along the radial direction. The teeth distal end 12 is disposed at a distal end of the tooth winding portion 11 and extends along the circumferential direction.

Each coil 6 is wound around the tooth winding portion 11 of each of the teeth 10. The coils 6 may include only coils for excitation, may include only coils for detection, or may include coils for excitation and coils for detection. The number of turns of each coil 6 is adjusted as appropriate so that a generated induced voltage is sinusodially distributed. In the first exemplary embodiment, the number of turns of each coil 6 is not particularly limited.

The connecting wires 7 electrically connect the plurality of coils 6 to each other. Specifically, some connecting wires 7 electrically connect a plurality of excitation coils included in the plurality of coils 6 to each other, and other connecting wires 7 electrically connect a plurality of detection coils included in the plurality of coils 6 to each other. The plurality of coils 6 include a first coil 6P (first coil) and a second coil 6Q (second coil) which are adjacent to each other in the circumferential direction. Each connecting wire 7 extends, for example, from a first tooth 10P (first tooth), which is the tooth 10 corresponding to the first coil 6P, toward a second tooth 10Q (second tooth) which is the tooth 10 corresponding to the second coil 6Q. In other words, each connecting wire 7 extends, for example, from the first tooth 10P (first tooth), which is the tooth 10 at which the first coil 6P is disposed, toward the second tooth 10Q (second tooth) which is the tooth 10 at which the second coil 6Q is disposed.

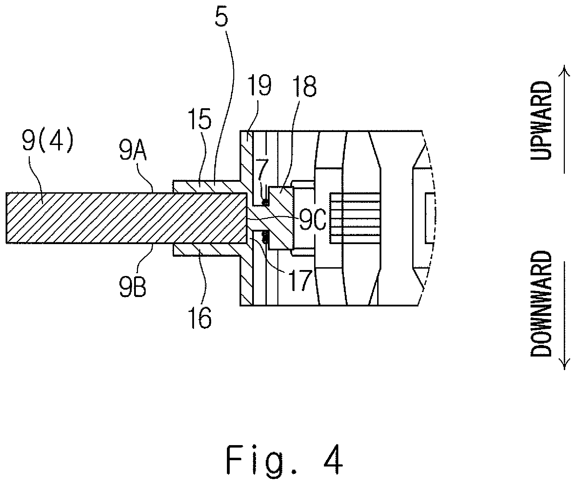

The insulator 5 is made of insulating resin and is fixed to the stator core 4 by, for example, insert molding. The insulator 5 is provided mainly for preventing the plurality of coils 6 and the plurality of connecting wires 7 from being brought into direct contact with the stator core 4. As shown in Figs. 2 and 4, the insulator 5 includes a core upper surface cover portion 15, a core lower surface cover portion 16, a core inner peripheral surface cover portion 17, a plurality of guide hooks 18, and a peripheral wall 19.

As shown in Fig. 4, the yoke 9 of the stator core 4 has a yoke upper surface 9A that faces upward, a yoke lower surface 9B that faces downward, and an inner peripheral surface 9C. The core upper surface cover portion 15 is disposed on the yoke upper surface 9A so as to cover the yoke upper surface 9A. The core lower surface cover portion 16 is disposed on the yoke lower surface 9B so as to cover the yoke lower surface 9B. The core inner peripheral surface cover portion 17 is disposed on the inner peripheral surface 9C so as to cover the inner peripheral surface 9C. Accordingly, the core upper surface cover portion 15, the core lower surface cover portion 16, and the core inner peripheral surface cover portion 17 form a U-shape in cross section.

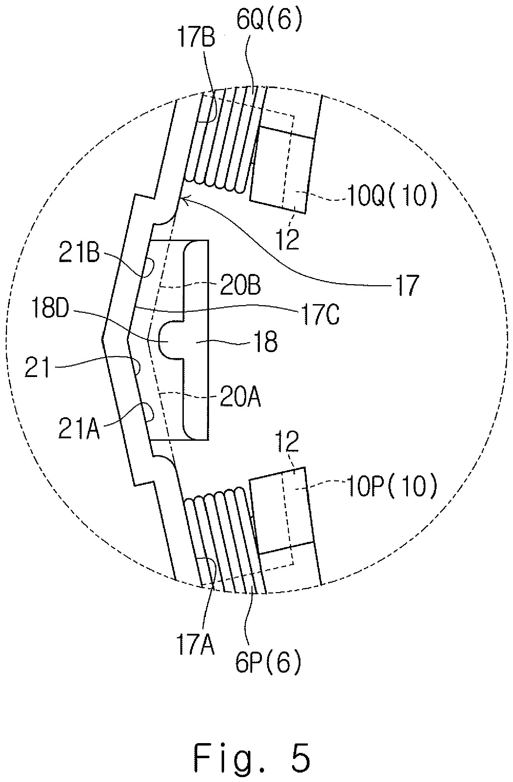

As shown in Fig. 5, the core inner peripheral surface cover portion 17 includes a first flat surface 17A (first inner surface), a second flat surface 17B (second inner surface), and a recess 17C. The first flat surface 17A is a flat surface that is located outside of the first coil 6P in the radial direction and faces the first coil 6P in the radial direction. The second flat surface 17B is a flat surface that is located outside of the second coil 6Q in the radial direction and faces the second coil 6Q in the radial direction. The recess 17C is disposed between the first flat surface 17A and the second flat surface 17B. The recess 17C is recessed outward in the radial direction. Specifically, a plane virtually extending from the first flat surface 17A when the first flat surface 17A and the second flat surface 17B are virtually extended until the first flat surface 17A and the second flat surface 17B intersect with each other is defined as a first virtual plane 20A (first virtual plane). Similarly, a plane virtually extending from the second flat surface 17B when the first flat surface 17A and the second flat surface 17B are virtually extended until the first flat surface 17A and the second flat surface 17B intersect with each other is defined as a second virtual plane 20B (second virtual plane). The recess 17C is recessed outward in the radial direction relative to the first virtual plane 20A and the second virtual plane 20B. In the first exemplary embodiment, an inside surface 21 of the recess 17C includes a flat surface 21A that is parallel to the first virtual plane 20A, and a flat surface 21B that is parallel to the second virtual plane 20B. The inside surface 21 of the recess 17C has a V-shape in plan view. However, the inside surface 21 of the recess 17C may instead be a curved surface that is curved so as to be convex outward in the radial direction, or may have other shapes. Note that the term "plan view" means a view along the rotation axis 2C.

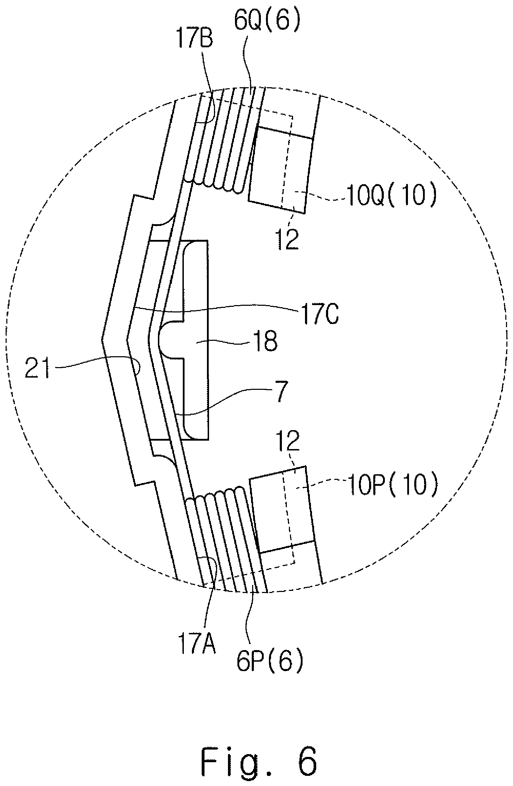

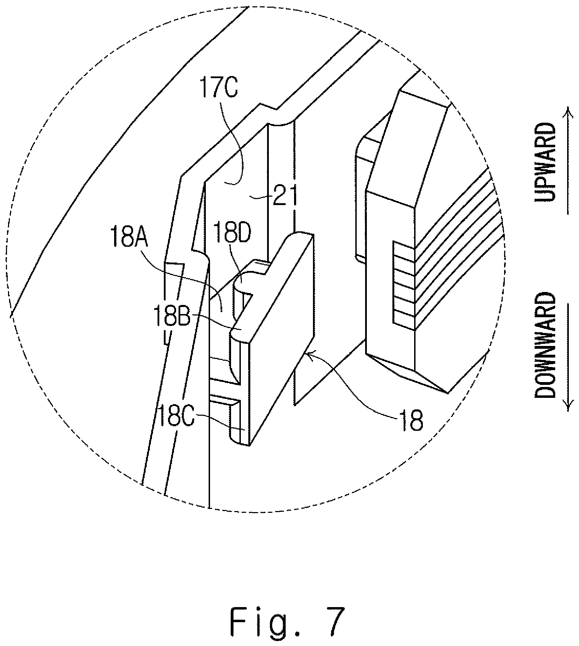

Fig. 6 illustrates a state where each guide hook 18 guides the connecting wire 7. Note that in Fig. 6, for ease of explanation, only one connecting wire 7 extending from the first tooth 10P toward the second tooth 10Q is illustrated, and the illustration of the other connecting wires 7 is omitted. As shown in Fig. 6, each guide hook 18 is disposed between two coils 6 (the first coil 6P and the second coil 6Q) that are adjacent to each other in the circumferential direction. In other words, each guide hook 18 is disposed between two teeth 10 (the first tooth 10P and the second tooth 10Q) that are adjacent to each other in the circumferential direction. Each guide hook 18 is disposed at the corresponding recess 17C of the core inner peripheral surface cover portion 17. In the first exemplary embodiment, only one guide hook 18 is disposed at each recess 17C of the core inner peripheral surface cover portion 17. Each guide hook 18 is disposed in such a manner that the guide hook 18 is visible from the rotation axis 2C of the resolver stator 2. When each guide hook 18 is viewed from the rotation axis 2C of the resolver stator 2, the guide hook 18 is disposed at a distance, in the circumferential direction, from the teeth distal ends 12 of the two teeth 10 (the first tooth 10P and the second tooth 10Q) that are adjacent to each other in the circumferential direction. Each guide hook 18 guides the corresponding connecting wire 7 extending from the first tooth 10P toward the second tooth 10Q. As shown in Fig. 7, each guide hook 18 includes an inward projecting portion 18A, a first projecting portion 18B, and a second projecting portion 18C. The inward projecting portion 18A projects inward in the radial direction from the inside surface 21 of the recess 17C of the core inner peripheral surface cover portion 17. The first projecting portion 18B projects upward from the distal end of the inward projecting portion 18A. The second projecting portion 18C projects downward from the distal end of the inward projecting portion 18A. The first projecting portion 18B and the second projecting portion 18C are disposed at a distance from the inside surface 21 of the recess 17C of the core inner peripheral surface cover portion 17 in the radial direction. The inward projecting portion 18A has a thin-plate shape, and the thickness direction of the inward projecting portion 18A is parallel to the rotation axis 2C. The first projecting portion 18B and the second projecting portion 18C each have a thin-plate shape, and the thickness direction of the first projecting portion 18B and the second projecting portion 18C is parallel to the radial direction. Each guide hook 18 further includes a first protrusion 18D and a second protrusion (not shown). The first protrusion 18D projects outward in the radial direction from the center in the circumferential direction of the first projecting portion 18B. The second protrusion projects outward in the radial direction from the center in the circumferential direction of the second projecting portion 18C. As shown in Fig. 5, the first protrusion 18D of each guide hook 18 may be located inward in the radial direction relative to the first virtual plane 20A, or may project outward in the radial direction across the first virtual plane 20A and the second virtual plane 20B. The same holds true for the second protrusion of each guide hook 18.

As shown in Fig. 4, the peripheral wall 19 projects upward and downward from the core inner peripheral surface cover portion 17. As shown in Fig. 2, the peripheral wall 19 is formed so as to have an annular shape. The presence of the peripheral wall 19 prevents each coil 6 from being deformed outward in the radial direction.

The external connecting portion 8 is a portion that holds an end of each of the plurality of connecting wires 7 so as to receive an excitation signal supplied from an external device, and output detection signals generated by the resolver stator 2 to the external device. The external connecting portion 8 includes a plurality of terminals and a terminal holding portion. An end of each of the plurality of connecting wire 7 is electrically connected to a corresponding one of each of the plurality of terminals. The terminal holding portion holds the plurality of terminals by insert molding. The terminal holding portion is formed integrally with the insulator 5. The terminal holding portion may instead be formed separately from the insulator 5.

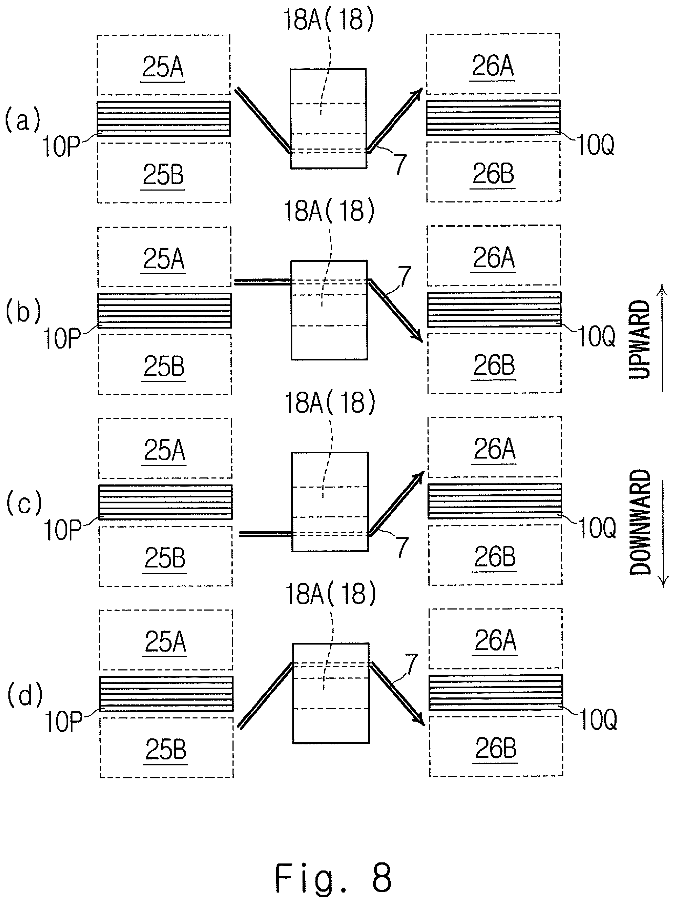

Next, the arrangement of the connecting wires 7 will be described in detail with reference to Figs. 6 and 8. In Fig. 8, a space formed above the first tooth 10P is defined as a first upper space 25A, and a space formed below the first tooth 10P is defined as a first lower space 25B. Similarly, a space formed above the second tooth 10Q is defined as a second upper space 26A, and a space formed below the second tooth 10Q is defined as a second lower space 26B. In Fig. 8, (a) illustrates a case where the connecting wire 7 extends from the first upper space 25A toward the second upper space 26A; (b) illustrates a case where the connecting wire 7 extends from the first upper space 25A toward the second lower space 26B; (c) illustrates a case where the connecting wire 7 extends from the first lower space 25B toward the second upper space 26A; and (d) illustrates a case where the connecting wire 7 extends from the first lower space 25B toward the second lower space 26B. In the case (a) where the connecting wire 7 extends from the first upper space 25A toward the second upper space 26A, the connecting wire 7 is guided to the guide hook 18 so that the connecting wire 7 passes below the inward projecting portion 18A of the guide hook 18, with the result that the connecting wire 7 is curved so as to be convex downward. Similarly, in the case (b) where the connecting wire 7 extends from the first upper space 25A toward the second lower space 26B, the connecting wire 7 is guided to the guide hook 18 so that the connecting wire 7 passes above the inward projecting portion 18A of the guide hook 18, with the result that the connecting wire 7 is curved so as to be convex upward. Similarly, in the case (c) where the connecting wire 7 extends from the first lower space 25B toward the second upper space 26A, the connecting wire 7 is guided to the guide hook 18 so that the connecting wire 7 passes below the inward projecting portion 18A of the guide hook 18, with the result that the connecting wire 7 is curved so as to be convex downward. Similarly, in the case (d) where the connecting wire 7 extends from the first lower space 25B toward the second lower space 26B, the connecting wire 7 is guided to the guide hook 18 so that the connecting wire 7 passes above the inward projecting portion 18A of the guide hook 18 (also see Fig. 6), with the result that the connecting wire 7 is curved so as to be convex upward. In any of the above cases, when the connecting wire 7 passes above the inward projecting portion 18A of the guide hook 18, the connecting wire 7 passes between the inside surface 21 of the recess 17C and the first projecting portion 18B of the guide hook 18 shown in Fig. 7. At this time, the connecting wire 7 faces the first projecting portion 18B of the guide hook 18 in the radial direction (also see Fig. 4). Similarly, in any one of the above cases, when the connecting wire 7 passes below the inward projecting portion 18A of the guide hook 18, the connecting wire 7 passes between the inside surface 21 of the recess 17C and the second projecting portion 18C of the guide hook 18. At this time, the connecting wire 7 faces the second projecting portion 18C of the guide hook 18 in the radial direction (also see Fig. 4). Further, since the guide hook 18 is disposed at the recess 17C as shown in Fig. 6, when disposing the connecting wire 7 from the first tooth 10P toward the second tooth 10Q, the connecting wire 7 which has passed through the guide hook 18 can be brought closer to the second flat surface 17B. This structure makes it possible to start winding the second coil 6Q from the root of the second tooth 10Q.

The first exemplary embodiment described above has the following features.

The resolver stator 2 includes: the stator core 4 including the yoke 9 having an annular shape and the plurality of teeth 10 projecting inward in the radial direction from the yoke 9; the insulator 5 that covers the inner peripheral surface of the yoke 9; the plurality of coils 6 to be wound around the plurality of teeth 10, respectively; the connecting wires 7 that electrically connect the plurality of coils 6 to each other; and the guide hooks 18 that guide the connecting wires 7. The plurality of coils 6 include the first coil 6P and the second coil 6Q that are adjacent to each other in the circumferential direction. At least a part of each of the connecting wires 7 extends from the first tooth 10P corresponding to the first coil 6P toward the second tooth 10Q corresponding to the second coil 6Q, and is hooked to the corresponding guide hook 18 so as to be curved in a convex shape projecting outward in the radial direction. The insulator 5 includes: the first flat surface 17A (first inner surface) that is located outside of the first coil 6P in the radial direction and faces the first coil 6P in the radial direction; the second flat surface 17B (second inner surface) that is located outside of the second coil 6Q in the radial direction and faces the second coil 6Q in the radial direction; and the recess 17C that is recessed outward in the radial direction relative to the first virtual plane 20A (first virtual plane) and the second virtual plane 20B (second virtual plane), the first virtual plane 20A and the second virtual plane 20B being defined by virtually extending the first flat surface 17A and the second flat surface 17B until the first flat surface 17A and the second flat surface 17B intersect with each other. The first virtual plane 20A virtually extends from the first flat surface 17A, and the second virtual plane 20B virtually extends from the second flat surface 17B. The guide hook 18 is disposed at the corresponding recess 17C. According to the above structure, unlike in the case where the recess 17C is not provided, when winding each connecting wire 7 from the first tooth 10P corresponding to the first coil 6P toward the second tooth 10Q corresponding to the second coil 6Q, the connecting wire 7 which has passed through the guide hook 18 can be brought closer to the second flat surface 17B. This structure makes it possible to start winding the second coil 6Q from the root of the second tooth 10Q.

The resolver stator 2 has the upward direction (first axial direction) parallel to the rotation axis 2C of the resolver stator 2, and the downward direction (second axial direction) opposite to the upward direction. Each guide hook 18 includes: the inward projecting portion 18A projecting inward in the radial direction from the inside surface 21 of the recess 17C; the first projecting portion 18B projecting upward from the inward projecting portion 18A; and the second projecting portion 18C projecting downward from the inward projecting portion 18A. According to the above structure, the guide hooks 18 can guide each connecting wire 7 in any one of the following cases, without any problem. That is, (1) a case where the connecting wire 7 extends from the first upper space 25A toward the second upper space 26A; (2) a case where the connecting wire 7 extends from the first upper space 25A toward the second lower space 26B; (3) a case where the connecting wire 7 extends from the first lower space 25B toward the second upper space 26A; and (4) a case where the connecting wire 7 extends from the first lower space 25B toward the second lower space 26B.

Each guide hook 18 is disposed so as to be visible from the rotation axis 2C of the resolver stator 2. According to the above structure, a variation in the posture of a winding nozzle can be suppressed when each connecting wire 7 is hooked to the corresponding guide hook 18, unlike in the case where each guide hook 18 is disposed at a location where the guide hook 18 is not visible from the rotation axis 2C of the resolver stator 2. Thus, a time required for winding can be reduced.

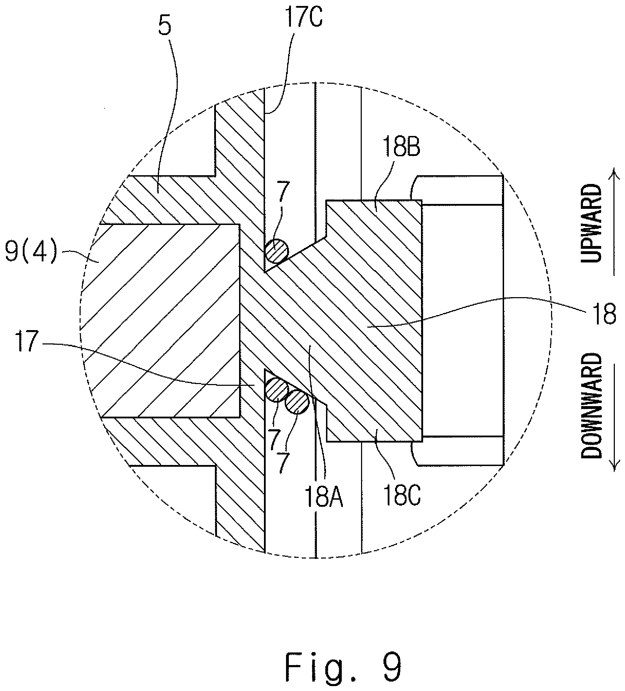

As shown in Fig. 9, the inward projecting portion 18A may be tapered outward in the radial direction. Specifically, the inward projecting portion 18A may be formed in such a manner that the thickness of the inward projecting portion 18A gradually decreases toward the outside in the radial direction. According to the above structure, when a tension is applied to the connecting wire 7 that is hooked to the guide hook 18, the connecting wire 7 automatically moves outward in the radial direction along an inclination of the inward projecting portion 18A. This structure makes it possible to more reliably start winding the second coil 6Q from the root of the second tooth 10Q. The thickness of the inward projecting portion 18A refers to the dimension of the inward projecting portion 18A in the axial direction of the resolver stator 2.

Note that in the first exemplary embodiment described above, the number of the guide hook 18 may be one, and the number of the connecting wire 7 may be one.

### (Second Exemplary Embodiment)

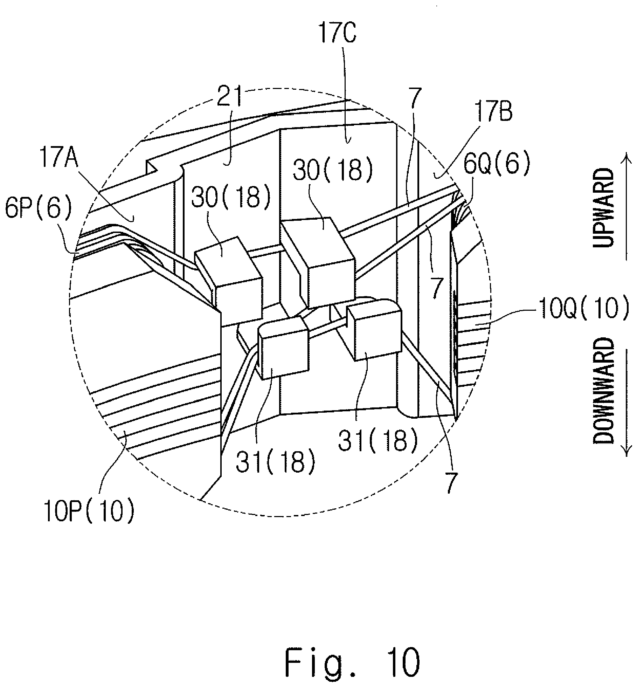

A second exemplary embodiment will be described below with reference to Fig. 10. Differences between the second exemplary embodiment and the first exemplary embodiment will be mainly described below, and repeated explanations are omitted.

In the first exemplary embodiment, as shown in Fig. 3, only one guide hook 18 is disposed between two coils 6 (the first coil 6P and the second coil 6Q) that are adjacent to each other in the circumferential direction. On the other hand, in the second embodiment, as shown in Fig. 10, four guide hooks 18 are disposed between two coils 6 (the first coil 6P and the second coil 6Q) that are adjacent to each other in the circumferential direction. The four guide hooks 18 include two upper guide hooks 30 (first guide hook) and two lower guide hooks 31 (second guide hook). The two upper guide hooks 30 are disposed above the two lower guide hooks 31. Each upper guide hook 30 projects inward in the radial direction from the inside surface 21 of the recess 17C and then projects downward. The two upper guide hooks 30 are disposed in the circumferential direction in such a manner that they are slightly apart from each other. Each lower guide hook 31 projects inward in the radial direction from the inside surface 21 of the recess 17C and then projects upward. The two lower guide hooks 31 are disposed in the circumferential direction in such a manner that they are slightly apart from each other. The two upper guide hooks 30 and the two lower guide hooks 31 are disposed in such a manner that they do not overlap each other in the axial direction of the resolver stator 2, in consideration of demolding during injection molding.

Fig. 10 illustrates three connecting wires 7 extending from the first tooth 10P toward the second tooth 10Q. As shown in Fig. 10, the connecting wires 7 each pass below the two upper guide hooks 30 and pass above the two lower guide hooks 31.

Which guide hook 18 is used to guide the connecting wires 7 is determined depending on the arrangement of the four guide hooks 18, the height dimensions of the teeth 10, and the like. Specific examples thereof are shown below.
(1) A case where the connecting wire 7 extends from the first upper space 25A toward the second upper space 26A
   In this case, the connecting wire 7 is guided by the two upper guide hooks 30.
(2) A case where the connecting wire 7 extends from the first upper space 25A toward the second lower space 26B
   In this case, the connecting wire 7 is guided by at least one or both of the upper guide hook 30 that is located closer to the first tooth 10P than the other one of the two upper guide hooks 30, and the lower guide hook 31 that is located closer to the second tooth 10Q than the other one of the two lower guide hooks 31.
(3) A case where the connecting wire 7 extends from the first lower space 25B toward the second upper space 26A
   In this case, the connecting wire 7 is guided by at least one or both of the lower guide hook 31 that is located closer to the first tooth 10P than the other one of the two lower guide hooks 31, and the upper guide hook 30 that is located closer to the second tooth 10Q than the other one of the two upper guide hooks 30.
(4) A case where the connecting wire 7 extends from the first lower space 25B toward the second lower space 26B

In this case, the connecting wire 7 is guided by the two lower guide hooks 31.

The second exemplary embodiment described above has the following features.

The resolver stator 2 includes the plurality of guide hooks 18. The plurality of guide hooks 18 include the upper guide hooks 30 (first guide hook) and the lower guide hooks 31 (second guide hook). Each upper guide hook 30 is disposed between the first coil 6P and the second coil 6Q and projects inward in the radial direction from the inside surface 21 of the recess 17C and projects downward. Each lower guide hook 31 is disposed between the first coil 6P and the second coil 6Q and projects inward in the radial direction from the inside surface 21 of the recess 17C and projects upward. According to the above structure, the connecting wires 7 can be guided without any problem in any one of the following cases. That is, a case (1) where the connecting wire 7 extends from the first upper space 25A toward the second upper space 26A; a case (2) where the connecting wire 7 extends from the first upper space 25A toward the second lower space 26B; a case (3) where the connecting wire 7 extends from the first lower space 25B toward the second upper space 26A; and a case (4) where the connecting wire 7 extends from the first lower space 25B toward the second lower space 26B.

The plurality of guide hooks 18 include two upper guide hooks 30. The two upper guide hooks 30 are disposed at a distance from each other in the circumferential direction. The plurality of guide hooks 18 include two lower guide hooks 31. The two lower guide hooks 31 are disposed at a distance from each other in the circumferential direction. According to the above structure, the guide hooks 18 can guide the corresponding connecting wire 7 more reliably in any one of the following cases. That is, a case (1) where the connecting wire 7 extends from the first upper space 25A toward the second upper space 26A; a case (2) where the connecting wire 7 extends from the first upper space 25A toward the second lower space 26B; a case (3) where the connecting wire 7 extends from the first lower space 25B toward the second upper space 26A; and a case (4) where the connecting wire 7 extends from the first lower space 25B toward the second lower space 26B.

Note that in the second exemplary embodiment described above, the number of the guide hooks 18 is four, but instead may be five or more. The number of the upper guide hooks 30 is two, but instead may be one or three or more. The number of the lower guide hooks 31 is two, but instead may be one or three or more.

In each of the exemplary embodiments described above, the insulator 5 includes the core upper surface cover portion 15, the core lower surface cover portion 16, and the core inner peripheral surface cover portion 17. Alternatively, the core upper surface cover portion 15 and the core lower surface cover portion 16 may be omitted.

Further, each connecting wire 7 may electrically connect two coils 6 adjacent to each other in the circumferential direction, or may electrically connect two coils that are not adjacent to each other in the circumferential direction. Two coils 6 to be electrically connected by each connecting wire 7 are determined depending on how to wind the excitation coils and detection coils around the teeth 10, or which one of one-phase excitation two-phase detection, two-phase excitation one-phase detection, and two-phase excitation two-phase detection is adopted by the resolver stator 2.

The first flat surface 17A and the second flat surface 17B are flat surfaces, but instead may be curved surfaces.

From the invention thus described, it will be obvious that the embodiments of the invention may be varied in many ways. Such variations are not to be regarded as a departure from the spirit and scope of the invention, and all such modifications as would be obvious to one skilled in the art are intended for inclusion within the scope of the following claims.

## Claims

1. A resolver stator (2) comprising:
a stator core (4) including a yoke (9) having an annular shape, and a plurality of teeth (10) projecting inward in a radial direction from the yoke (9);
an insulator (5) that covers an inner peripheral surface of the yoke (9);
a plurality of coils (6) to be wound around the plurality of teeth (10), respectively;
a connecting wire (7) that electrically connects the plurality of coils (6) to each other; and
a guide hook (18) that guides the connecting wire (7), wherein
the plurality of coils (6) include a first coil (6P) and a second coil (6Q), the first coil (6P) and the second coil (6Q) being adjacent to each other in a circumferential direction,
at least a part of the connecting wire (7) extends from the tooth (10P) corresponding to the first coil (6P) toward the tooth (10Q) corresponding to the second coil (6Q) and is hooked to the guide hook (18) so as to be curved in a convex shape projecting outward in the radial direction,
the insulator (5) includes:
a first inner surface (17A) that is located radially outside of the first coil (6P) in the radial direction and faces the first coil (6P) in the radial direction;
a second inner surface (17B) that is located radially outside of the second coil (6Q) in the radial direction and faces the second coil (6Q) in the radial direction; and
**characterized in that** the insulator comprises a recess (17C) that is recessed outward in the radial direction relative to a first virtual plane (20A) and a second virtual plane (20B), the first virtual plane (20A) and the second virtual plane (20B) being defined by virtually extending the first inner surface (17A) and the second inner surface (17B) until the virtually extended first inner surface (17A) and the virtually extended second inner surface (17B) intersect with each other, the first virtual plane (20A) virtually extending from the first inner surface (17A), the second virtual plane (20B) virtually extending from the second inner surface (17B), and the guide hook (18) is disposed at the recess (17C) and projects inward in the radial direction from an inside surface (21) of the recess (17C).

2. The resolver stator (2) according to Claim 1, wherein
the resolver stator (2) has a first axial direction parallel to a rotation axis (2C) of the resolver stator (2), and a second axial direction opposite to the first axial direction,
the guide hook (18) includes:
an inward projecting portion (18A) projecting inward in the radial direction from an inside surface (21) of the recess (17C);
a first projecting portion (18B) projecting in the first axial direction from the inward projecting portion (18A); and
a second projecting portion (18C) projecting in the second axial direction from the inward projecting portion (18A).

3. The resolver stator (2) according to Claim 1, wherein
the resolver stator (2) has a first axial direction parallel to a rotation axis (2C) of the resolver stator (2), and a second axial direction opposite to the first axial direction,
the resolver stator (2) includes a plurality of the guide hooks (18),
the plurality of guide hooks (18) includes:
a first guide hook (30) that is disposed between the first coil (6P) and the second coil (6Q) and projects inward in the radial direction from an inside surface (21) of the recess (17C) and in the second axial direction; and
a second guide hook (31) that is disposed between the first coil (6P) and the second coil (6Q) and projects inward in the radial direction from the inside surface (21) of the recess (17C) and in the first axial direction.

4. The resolver stator (2) according to Claim 3, wherein
the plurality of guide hooks (18) includes a plurality of the first guide hooks (30),
the plurality of first guide hooks (30) are disposed at a distance from each other in the circumferential direction,
the plurality of guide hooks (18) includes a plurality of the second guide hooks (31), and
the plurality of second guide hooks (31) are disposed at a distance from each other in the circumferential direction.

## Patentansprüche

1. Resolver-Stator (2), umfassend:
einen Statorkern (4), enthaltend ein Joch (9) in einer Ringform und mehrere Zähne (10), die in einer radialen Richtung vom Joch (9) nach innen vorstehen;
einen Isolator (5), der eine innere Umfangsfläche des Jochs (9) bedeckt;
mehrere Spulen (6), die jeweils um die mehreren Zähne (10) zu wickeln sind;
einen Verbindungsdraht (7), der die mehreren Spulen (6) elektrisch miteinander verbindet; und
einen Führungshaken (18), der den Verbindungsdraht (7) führt, wobei
die mehreren Spulen (6) eine erste Spule (6P) und eine zweite Spule (6Q) enthalten, wobei die erste Spule (6P) und die zweite Spule (6Q) in Umfangsrichtung nebeneinander liegen,
zumindest ein Teil des Verbindungsdrahts (7) sich von den Zähnen (10P), die der ersten Spule (6P) entsprechen, zu den Zähnen (10Q) erstreckt, die der zweiten Spule (6Q) entsprechen, und am Führungshaken (18) eingehakt ist, sodass er in einer konvexen Form gekrümmt ist, die in der radialen Richtung nach außen vorsteht,
wobei der Isolator (5) enthält:
eine erste Innenfläche (17A), die in der radialen Richtung radial außerhalb der ersten Spule (6P) gelegen ist und der ersten Spule (6P) in der radialen Richtung zugewandt ist;
eine zweite Innenfläche (17B), die in der radialen Richtung radial außerhalb der zweiten Spule (6Q) gelegen ist und der zweiten Spule (6Q) in der radialen Richtung zugewandt ist; und
**dadurch gekennzeichnet, dass** der Isolator eine Ausnehmung (17C) umfasst, die in der radialen Richtung relativ zu einer ersten virtuellen Ebene (20A) und einer zweiten virtuellen Ebene (20B) vertieft ist, wobei die erste virtuelle Ebene (20A) und die zweite virtuelle Ebene (20B) durch virtuelles Verlängern der ersten Innenfläche (17A) und der zweiten Innenfläche (17B), bis die virtuell verlängerte erste Innenfläche (17A) und die virtuell verlängerte zweite Innenfläche (17B) einander schneiden, definiert sind, wobei sich die erste virtuelle Ebene (20A) von der ersten Innenfläche (17A) virtuell erstreckt, die zweite virtuelle Ebene (20B) sich von der zweiten Innenfläche (17B) virtuell erstreckt und der Führungshaken (18) an der Ausnehmung (17C) angeordnet ist und in der radialen Richtung von einer Innenfläche (21) der Ausnehmung (17C) nach innen vorsteht.

2. Resolver-Stator (2) nach Anspruch 1, wobei:
der Resolver-Stator (2) eine erste Achsenrichtung parallel zu einer Drehachse (2C) des Resolver-Stators (2) und eine zweite Achsenrichtung, die der ersten Achsenrichtung entgegengesetzt ist, hat,
der Führungshaken (18) enthält:
einen nach innen vorstehenden Abschnitt (18A), der in der radialen Richtung von einer Innenfläche (21) der Ausnehmung (17C) nach innen vorsteht;
einen ersten vorstehenden Abschnitt (18B), der in der ersten Achsenrichtung von dem nach innen vorstehenden Abschnitt (18A) vorsteht; und
einen zweiten vorstehenden Abschnitt (18C), der in der zweiten Achsenrichtung von dem nach innen vorstehenden Abschnitt (18A) vorsteht.

3. Resolver-Stator (2) nach Anspruch 1, wobei
der Resolver-Stator (2) eine erste Achsenrichtung parallel zu einer Drehachse (2C) des Resolver-Stators (2) und eine zweite Achsenrichtung, die der ersten Achsenrichtung entgegengesetzt ist, hat,
der Resolver-Stator (2) mehrere der Führungshaken (18) enthält,
die mehreren Führungshaken (18) enthalten:
einen ersten Führungshaken (30), der zwischen der ersten Spule (6P) und der zweiten Spule (6Q) angeordnet ist und in der radialen Richtung von einer Innenfläche (21) der Ausnehmung (17C) und in der zweiten Achsenrichtung nach innen vorsteht; und
eine zweiten Führungshaken (31), der zwischen der ersten Spule (6P) und der zweiten Spule (6Q) angeordnet ist und in der radialen Richtung von der Innenfläche (21) der Ausnehmung (17C) und in der ersten Achsenrichtung nach innen vorsteht.

4. Resolver-Stator (2) nach Anspruch 3, wobei
die mehreren Führungshaken (18) mehrere der ersten Führungshaken (30) enthalten,
die mehreren ersten Führungshaken (30) mit Abstand zueinander in der Umfangsrichtung angeordnet sind,
die mehreren Führungshaken (18) mehrere der zweiten Führungshaken (31) enthalten und
die mehreren zweiten Führungshaken (31) mit Abstand zueinander in der Umfangsrichtung angeordnet sind.

## Revendications

1. Stator de résolveur (2) comprenant :
un noyau de stator (4) comprenant une culasse (9) ayant une forme annulaire, et une pluralité de dents (10) faisant saillie vers l'intérieur dans une direction radiale à partir de la culasse (9) ;
un isolant (5) qui recouvre une surface périphérique interne de la culasse (9) ;
une pluralité de bobines (6) à enrouler autour de la pluralité de dents (10), respectivement ;
un fil de connexion (7) qui connecte électriquement la pluralité de bobines (6) les unes aux autres ; et
un crochet de guidage (18) qui guide le fil de connexion (7),
la pluralité de bobines (6) comprenant une première bobine (6P) et une seconde bobine (6Q), la première bobine (6P) et la seconde bobine (6Q) étant adjacentes l'une à l'autre dans une direction circonférentielle,
au moins une partie du fil de connexion (7) s'étendant à partir de la dent (10P) correspondant à la première bobine (6P) vers la dent (10Q) correspondant à la seconde bobine (6Q) et étant accrochée au crochet de guidage (18) de manière à être incurvée dans une forme convexe faisant saillie vers l'extérieur dans la direction radiale,
l'isolant (5) comprenant :
une première surface interne (17A) qui est située radialement à l'extérieur de la première bobine (6P) dans la direction radiale et faisant face à la première bobine (6P) dans la direction radiale ;
une seconde surface interne (17B) qui est située radialement à l'extérieur de la seconde bobine (6Q) dans la direction radiale et faisant face à la seconde bobine (6Q) dans la direction radiale ; et
**caractérisée en ce que** l'isolant comprend un évidement (17C) qui est en retrait vers l'extérieur dans la direction radiale par rapport à un premier plan virtuel (20A) et un second plan virtuel (20B), le premier plan virtuel (20A) et le second plan virtuel (20B) étant définis par extension virtuelle de la première surface interne (17A) et de la seconde surface interne (17B) jusqu'à ce que la première surface interne virtuellement étendue (17A) et la seconde surface interne virtuellement étendue (17B) se croisent l'une l'autre, le premier plan virtuel (20A) s'étendant virtuellement à partir de la première surface interne (17A), le second plan virtuel (20B) s'étendant virtuellement à partir de la seconde surface interne (17B), et le crochet de guidage (18) étant disposé au niveau de l'évidement (17C) et faisant saillie vers l'intérieur dans la direction radiale à partir d'une surface intérieure (21) de l'évidement (17C).

2. Stator de résolveur (2) selon la revendication 1,
le stator de résolveur (2) ayant une première direction axiale parallèle à un axe de rotation (2C) du stator de résolveur (2), et une seconde direction axiale opposée à la première direction axiale,
le crochet de guidage (18) comprenant :
une partie saillante vers l'intérieur (18A) faisant saillie vers l'intérieur dans la direction radiale à partir d'une surface intérieure (21) de l'évidement (17C) ;
une première partie saillante (18B) faisant saillie dans la première direction axiale à partir de la partie faisant saillie vers l'intérieur (18A) ; et
une seconde partie saillante (18C) faisant saillie dans la seconde direction axiale à partir de la partie saillante vers l'intérieur (18A).

3. Stator de résolveur (2) selon la revendication 1,
le stator de résolveur (2) ayant une première direction axiale parallèle à un axe de rotation (2C) du stator de résolveur (2), et une seconde direction axiale opposée à la première direction axiale,
le stator de résolveur (2) comprenant une pluralité de crochets de guidage (18),
la pluralité de crochets de guidage (18) comprenant :
un premier crochet de guidage (30) qui est disposé entre la première bobine (6P) et la seconde bobine (6Q) et faisant saillie vers l'intérieur dans la direction radiale à partir d'une surface intérieure (21) de l'évidement (17C) et dans la seconde direction axiale ; et
un second crochet de guidage (31) qui est disposé entre la première bobine (6P) et la seconde bobine (6Q) et faisant saillie vers l'intérieur dans la direction radiale à partir de la surface intérieure (21) de l'évidement (17C) et dans la première direction axiale.

4. Stator de résolveur (2) selon la revendication 3,
la pluralité de crochets de guidage (18) comprenant une pluralité de premiers crochets de guidage (30),
la pluralité de premiers crochets de guidage (30) étant disposés à une certaine distance les uns des autres dans la direction circonférentielle,
la pluralité de crochets de guidage (18) comprenant une pluralité de seconds crochets de guidage (31), et
la pluralité de seconds crochets de guidage (31) étant disposés à une certaine distance les uns des autres dans la direction circonférentielle.
